# EUROPEAN PATENT SPECIFICATION

(11) **EP 2 428 022 B1**
(45) Date of publication and mention of the grant of the patent: **07.11.2018**
(21) Application number: 10715462.7
(22) Date of filing: 22.04.2010
(51) Int. Cl.: H04L 29/08, H04L 29/06, H04W 12/06

(54) **METHOD AND APPARATUS FOR PROXIMITY BASED PAIRING OF MOBILE DEVICES**
VERFAHREN UND VORRICHTUNG ZUR PAARUNG VON MOBILGERÄTEN AUF PROXIMITÄTSBASIS
PROCÉDÉ ET APPAREIL POUR UN APPARIEMENT BASÉ SUR LA PROXIMITÉ DE DISPOSITIFS MOBILES

(30) Priority: 04.05.2009 US 435360
(43) Date of publication of application: 14.03.2012
(73) Proprietor: Apple Inc., Cupertino CA 95014 (US)
(72) Inventor: ALSINA, Thomas, Matthieu, F-75116 Paris (FR); TRIBBLE, Guy, L., Cupertino, CA 95014 (US); CHAMPEAUX, Philippe, F-75014 Paris (FR)
(74) Representative: Schmalz, Günther
(86) International application number: PCT/US2010/032115
(87) International publication number: WO 2010/129188

(56) References cited:
- EP-A1- 1 569 411
- EP-A1- 1 755 060
- EP-A2- 1 324 550
- WO-A1-2004/003801
- US-A1- 2005 174 975
- US-A1- 2007 162 569
- US-A1- 2007 188 323
- US-A1- 2009 111 378
- C.M.Gartrell: "SocialAware: Context-Aware Multimedia Presentation via Mobile Social Networks" 2008, XP002601028 Retrieved from the Internet: URL:http://www.cs.colorado.edu/~rhan/Paper s/Mike_Gartrell_CU_MS_thesis-final.pdf [retrieved on 2010-09-16]
- MAYRHOFER R ET AL: "Shake Well Before Use: Intuitive and Secure Pairing of Mobile Devices" 18 February 2009 (2009-02-18), IEEE TRANSACTIONS ON MOBILE COMPUTING, IEEE SERVICE CENTER, LOS ALAMITOS, CA, US, PAGE(S) 792 - 806 , XP011252694 ISSN: 1536-1233 the whole document
- EAGLE N ET AL: "Social Serendipity: Proximity Sensing and Cueing" INTERNET CITATION 31 May 2004 (2004-05-31), XP002392394 Retrieved from the Internet: URL:http://www-static.cc.gatech.edu/gvu/cc g//paper_of_week/socialserendipidty.pdf [retrieved on 2006-07-25]
- BEACH A ET AL: "WhozThat? evolving an ecosystem for context-aware mobile social networks" IEEE NETWORK, IEEE SERVICE CENTER, NEW YORK, NY, US LNKD- DOI:10.1109/MNET.2008.4579771, vol. 22, no. 4, 1 July 2008 (2008-07-01), pages 50-55, XP011232028 ISSN: 0890-8044
- HOLMQUIST L E ET AL: "SMART-ITS FRIENDS: A TECHNIQUE FOR USERS TO EASILY ESTABLISH CONNECTIONS BETWEEN SMART ARTEFACTS" INTERNET CITATION 1 September 2001 (2001-09-01), XP009052293 Retrieved from the Internet: URL:HTTP://www.smart-its.org/publication/s mart-its-friends.ubicomp2001.pdf [retrieved on 2001-09-01]

## Description

### FIELD OF INVENTION

The present invention relates generally to authorizing communications between network enabled devices. More particularly, this invention relates to secure instant pairing of mobile devices based on proximity to authorize communications.

### BACKGROUND

With the proliferation of network enabled mobile devices, such as mobile phones, smart phones, wireless headsets, etc., pairing separate mobile devices becomes more and more common. In particular, mobile devices are often paired to share data, such as personal photos, contacts, play lists, passwords or friendship information for social networking (e.g. Facebook® application) etc. Usually, such data sharing requires security protection.

Typical secure data sharing includes an authorization system. Traditionally, an authorization system relies on security mechanisms such as logins, password verifications and/or confirmation mails, etc. For examples, users of mobile phones may need to open applications, go into pairing modes, enter authorization codes, send emails and/or use "add friend" user interface buttons for the mobile phones to share data between each other. However, in a mobile environment, such authorization mechanisms are often tedious and cumbersome to be practically useful.

Therefore, traditional authorization mechanisms do not provide a simple, elegant and convenient method for mobile devices to share data securely.
Further background information can be found in the following documents: US2009/111378 which describes methods and devices for automatically coupling two or more mobile communication devices.
EP1324550 which describes a portable communication terminal which can establish communications between portable communication terminals by Bluetooth or the like by a simple operation.
Mayrhoffer R et al. "Shake well before use: Intuitive and Secure Pairing of Mobile Devcies," IEEE Transactions On Mobile Computing, 18 February 2009 which describes methods in which sensing and analysis of shaking movement is combined with cryptographic protocols for secure authentication

### SUMMARY OF THE DESCRIPTION

This object is solved by a method having the features of claim 1, a machine-readable non-transitory storage medium having the features of claim 14 and by an apparatus having the features of claim 15. Advantageous embodiments thereof are defined in the respective dependent claims.

### BRIEF DESCRIPTION OF THE DRAWINGS

The present invention is illustrated by way of example and not limitation in the figures of the accompanying drawings, in which like references indicate similar elements and in which:
Figures 1A and 1B are block diagrams illustrating an exemplary embodiment of pairing two mobile devices;
Figure 2 is a block diagram illustrating one embodiment of a system for a device to send pairing messages;
Figure 3 is a block diagram illustrating one embodiment of a system for a device to receive pairing messages sent from within close proximity;
Figure 4 is a flow diagram illustrating an exemplary process to send a pairing message to a nearby device detected nearby within close proximity;
Figure 5 is a flow diagram illustrating an exemplary process to respond to pairing messages received from a nearby device located within close proximity;
Figure 6 is a timing diagram illustrating exemplary sequences to pair nearby devices located within close proximity;
Figure 7 is a block diagram illustrating one example of user interfaces presented for pairing nearby devices located within close proximity;
Figure 8 is an illustration diagram for one example of two devices performing match verifications based on representations of motion signals;
Figure 9 is an illustration diagram for one example of matching two paired devices based on representations of motion signals;
Figure 10 illustrates one example of a typical computer system which may be used in conjunction with the embodiments described herein;
Figure 11 illustrates one example of a typical data processing system which may be used in one embodiment of the present invention.

### DETAILED DESCRIPTION

A method and an apparatus for pairing mobile devices based on proximity are described herein. In the following description, numerous specific details are set forth to provide thorough explanation of embodiments of the present invention. It will be apparent, however, to one skilled in the art, that embodiments of the present invention may be practiced without these specific details. In other instances, well-known components, structures, and techniques have not been shown in detail in order not to obscure the understanding of this description.

Reference in the specification to "one embodiment" or "an embodiment" means that a particular feature, structure, or characteristic described in connection with the embodiment can be included in at least one embodiment of the invention. The appearances of the phrase "in one embodiment" in various places in the specification do not necessarily all refer to the same embodiment.

The processes depicted in the figures that follow, are performed by processing logic that comprises hardware (e.g., circuitry, dedicated logic, etc.), software (such as is run on a general-purpose computer system or a dedicated machine), or a combination of both. Although the processes are described below in terms of some sequential operations, it should be appreciated that some of the operations described may be performed in different order. Moreover, some operations may be performed in parallel rather than sequentially.

According to certain embodiments of the invention, a securing mechanism is provided to authenticate communications between separate devices based on physical pairing. Two devices may be paired when placed close to each other within close proximity to perform authentication via a pairing message (or message-based pairing). Proximity sensors may be employed to ensure physical proximity thus adding a layer of security for pairing. In one embodiment, proximity sensors may include anIR LED (Light Emitting Diode) and/or an IR cell. The proximity sensor can include both an IR transmitter and an IR receiver. For example, two iPhone® mobile devices with proximity sensors may detect each others' IR signals when placed face-to-face at about an inch (or less) apart. In one embodiment, two iPhone® mobile devices vibrate to confirm pairing (e.g. complete message pairing or device pairing) when placed face to face for a short period of time (e.g. a second or two). Once paired, two applications, e.g. Facebook® applications, running separately in two mobile devices may be paired sharing a photo. Typical usage for device pairing may include "pick and go" within seconds.

Exemplary usages may include Web sharing, Bluetooth network sharing, social network sharing, or personal information sharing etc. Web sharing may be illustrated with user experiences described such as:
- "I'm back from a trip to Vegas, with a great new private MobileMe® album"
- "I meet Alex, and I want to share pictures with him. In a photo application on my iPhone® device, I push "Instant Share" and hold my iPhone® out"
- "Alex switches on his iPhone® device and holds it against mine"
- The two phones vibrate after a second or two to signal the completion of the pairing"
- "Alex's phone launches a photo application and starts browsing my MobileMe album"
Bluetooth network sharing may include exchanging Bluetooth key over IR signals (or IR pairing) to initiate a regular Bluetooth network connection (or Bluetooth pairing) without tedious user interactions entering network keys. Social network sharing may be illustrated with user experiences described such as:
- "Jessica and John meet and want to become friends on facebook"
- "Jessica opens the Facebook® application on her iPhone® device, chooses "add immediate friend" and holds out her iPhone® device"
- "John holds his iPhone® device against Jessica's without even the need to launch the Facebook® applicaton"
- "Two iPhone® devices exchange IR data, then vibrate or beep to signal the pairing"
- "Jessica sees John on her friends list on her iPhone® device"
- "John's iPhone® device launches Facebook® application, and when it's done opening, Jessica appears in the application"
Personal information sharing may be used to track, authenticate and/or tag a record, such as to authenticate in-person package delivery.

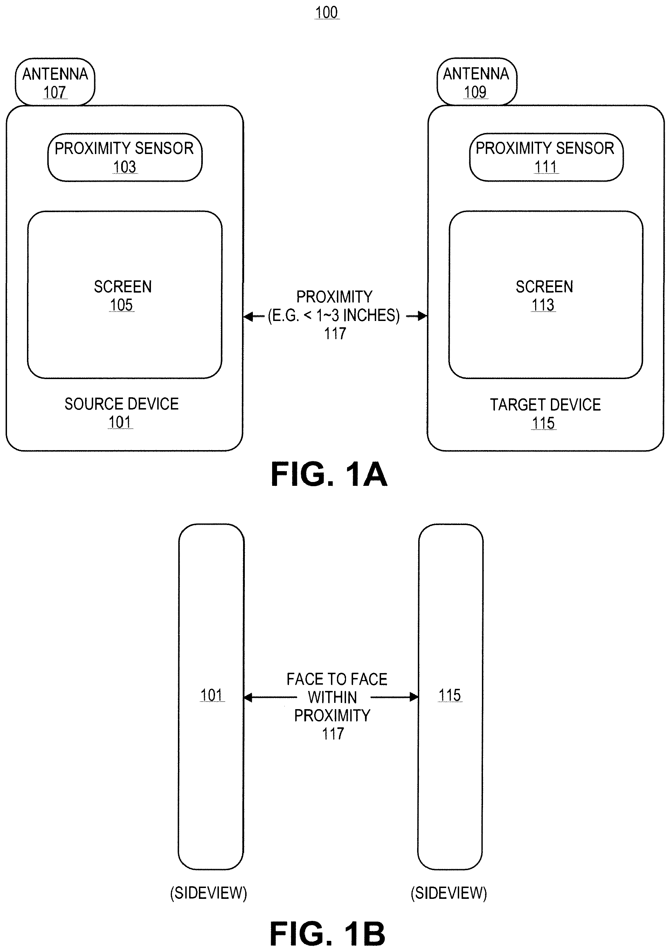

Figures 1A and 1B are block diagrams illustrating an exemplary embodiment of pairing two mobile or portable devices. Pairing devices 100 may include a source device 101 sending pairing messages to pair with a nearby target device 115 within close proximity 117. The source device 101 may be a mobile device, such as an iPhone® device from Apple Inc. The target device 115 may be another mobile device or a device fixed in a specific location. Usually, a device may operate as a source device or a target device for pairing messages at different times. In one embodiment, the source device 101 detects the presence of the target device 115 within close proximity according to proximity sensors 103, 111. Both devices may be placed in a face to face position to stay in proximity, as illustrated in Figure 1B. A proximity sensor may be based on short range wireless signals, such as, for example, IR, sound, ultrasound, or RF signals. Typically, such proximity may be within one to three inches or one to three feet in distance. Examples of proximity sensors are described in published U.S. patent application numbers 2008/006762 and 2007/0075965.

In one embodiment, the proximity sensor 103 includes a short range wireless network adapter which broadcasts wireless signals (e.g. packets) capable of reaching a range limited within close proximity (e.g. configured with a low level power usage). The source device 101 may detect the presence of the target device 115 via a reply received from the proximity sensor 111 in response to broadcasted signals from the proximity sensor 103. A short range wireless network connection (e.g. based on Infrared Data Communication) may be established between the source and target devices via proximity sensors 103, 111 when a presence of a device within close proximity is detected or paired. In some embodiments, the source device 101 is paired with the target device 115 once both devices exchanges handshakes packets initiated by one of the devices (e.g. the source device 101) over the short range wireless signals.

In one embodiment, a screen 105 of the source device 101 displays a user interface for receiving a user instruction to send pairing messages to pair with the target device 115 detected within close proximity 117. The user interface may be a part of an application (e.g. a social networking application) running in the source device 101 to pair with another corresponding application in the target device 115. The source device 101 may indicate the presence of the detected target device 115 via the user interface presented on the screen 105. Likewise, the target device 115 may indicate pairing with the source device 105 via the screen 113. In some embodiment, the source and/or target device vibrate or sound off special audio tones to alert users when device pairing occurs.

Once the source and target devices are successfully paired, in one embodiment, a separate communication channel is established between corresponding applications running in these two devices. For example, the source and target devices may establish a high speed wireless network connection, such as based on WiFi (wireless Ethernet network) or Bluetooth protocols via antennas 107, 109. In some embodiments, the paired devices may access a remote server on the Internet wirelessly to establish the communication channel. Typically, there is no need for the paired devices 101, 115 to remain in proximity to each other to maintain the separately established communication channel.

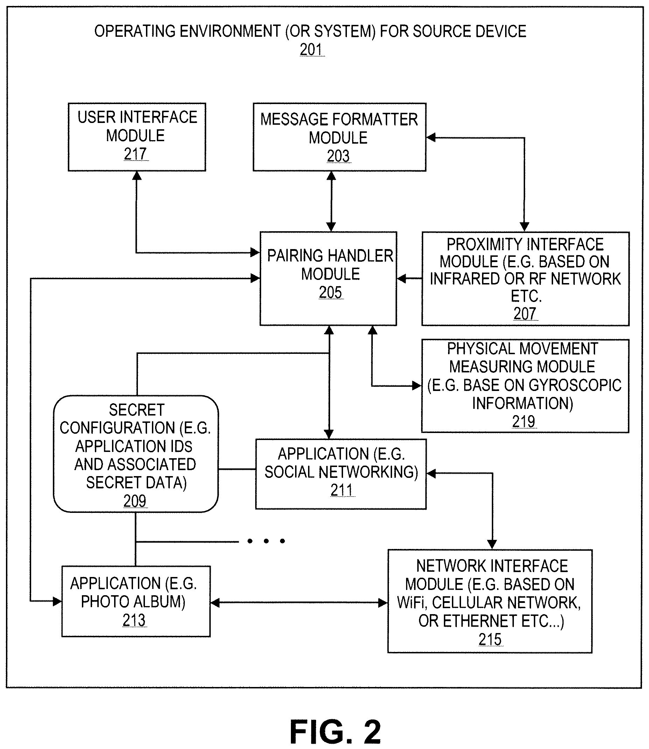

Figure 2 is a block diagram illustrating one embodiment of a device to send pairing messages. This device may be a smartphone, such as the iPhone, or a consumer electronic device. For example, system 201 may be an operating system supporting a source device101 of Figure 1A. In one embodiment, a proximity interface module 207 detects the presence of a target device via a proximity sensor, such as sensor 103 of Figure 1A. The proximity interface module 207 may be based on short range communication protocols, such as using IR signals, sound, ultrasound, RF signals or LED flashing light signals. In one embodiment, the proximity interface module 207 includes a short range wireless network interface adaptor for sending/receiving associated wireless network packets. For example, the proximity interface module 207 constantly send out (or broadcast) wireless packet with an INIT pattern to announce an interest in device pairing. The proximity interface module 207 may perform data exchange (e.g. handshakes) with a target device to determine its presence within close proximity, e.g. less than one to three inches, as configured via the associated proximity sensor (e.g. based on a power level applied). For example, the proximity interface module 207 may receive wireless packets including a BEGIN pattern from a nearby target device in response to broadcasted packets with INIT patterns. In turn, the proximity interface module 207 may send a reply packet with a CONFIRM pattern indicating pairing of the two devices. The proximity module 207 may send a notification indicating a target device is detected (or paired).

In one embodiment, a pairing handler module 205 displays a user interface element (e.g. a message box) for a user to initiate sending a pairing message for an application (e.g. the currently running application, such as a social networking application or a game) via a user interface module 217. In addition to graphical interface capabilities, the user interface module 217 may provide mechanical features, such as vibrating a device, to indicate message pairing. For example, a pairing module 205 may activate a mechanical interface feature through the user interface module 217 when receiving a message confirming a receipt of the pairing message from a target device. In other embodiments, completion of pairing between two devices, e.g. based on an successful establishment of a network communication channel through the network interface module 215 may trigger such a mechanical interface feature via the user interface module 217 initiated by an application participating in the corresponding device pairing.

In one embodiment, if the detected target device leaves the proximity area, the pairing handler module may automatically remove the user interface displayed for pairing messages. In response to a confirmation received from a user, the pairing handler module 205 may forward an application identifier identifying the currently running application and/or associated secrets (or data or notification data) to a message formatter module 203 to compose a pairing message for the currently running application. The message formatter module 203 may compose a pairing message including the application identifier and associated secrets to send to the detected target device via the proximity interface module 207. For example, a pairing message may be a string of ascii text (e.g. including a unique numeral number), such as "facebook://123456" or "photo://123456" to identify an application "facebook" or "photo" with "123456" as an associated secret.

In one embodiment, a secret configuration (or setting) 209 is configured with application identifiers and associated secrets for generating corresponding pairing messages. An application identifier may uniquely identify a single user application in different devices, such a social networking application 211, or a photo album application 213 etc. A secret for an application may be understood by its associated application. For example, a secret may be encrypted data including a password, a URL to locate a particular resource (e.g. where to download a photo album or other data from, for example, a server on the Internet), or other data the corresponding application may need. A password may be required to login into a web server, to make a network connection or to execute other tasks for an application. In some embodiments, a secret includes a randomly generated challenge for authentication. The pairing handler module 205 may generate a random number on the fly during runtime as a secret (or a part of a secret) for the message formatter module 203 to compose a pairing message. In one embodiment, a physical movement measuring module 219, e.g. based on gyroscopic information from an accelerometer, records a trace of physical movements (or motions) and/or generate a representation of the trace on the fly. In some embodiment, the dispatcher module 307 generates a representation of a trace of physical movements received from the physical movement measuring module 319.

Usually, the currently focused (or active) application among one or more applications, such as applications 211 ... 213, may send pairing messages when a target device is detected. In some embodiments, an application calls APIs (application programming interfaces) to register for message pairing in the secret configuration 209. The pairing handler module 205 may call an application directly to perform message pairing operations.

In one embodiment, as a result of message pairing, an application may establish a communication channel with the target device detected via a network interface module 215. Typically, the network interface module 215 may provide high speed wired or wireless network connections such as based on WiFi, Bluetooth, Cellular network or Ethernet specifications. The communication channel may be based on a direct (e.g. based on a local area network) or indirect (e.g. based on a remote web server) network connection with the target device detected via the proximity interface module 207. The target device may initiate the establishment of the network connection via the network interface module 215. A network connection with a target device via the network interface module 215 may be independent of whether the target device remains in close proximity.

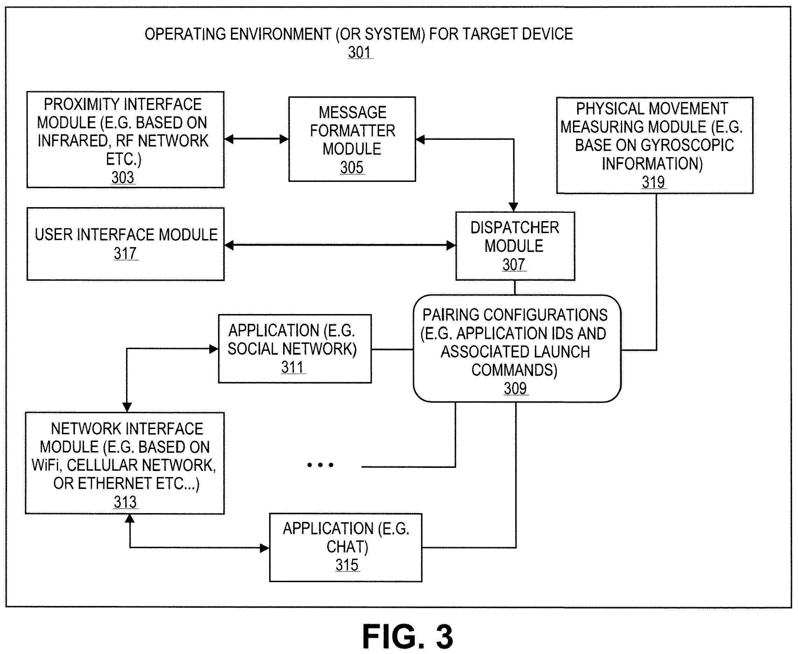

Figure 3 is a block diagram illustrating one embodiment of a system for a device to receive pairing messages sent from within close proximity. For example, system 301 may be an operating system supporting a target device 115 of Figure 1A. In one embodiment, a proximity interface module 303 listens to a broadcast packet sent from a source device, such as source device 101 of Figure 1A, located in proximity to the target device via a proximity sensor, such as sensor 111 of Figure 1A. The proximity interface module 303 may include a short range wireless network interface adaptor for sending/receiving associated wireless network packets. In one embodiment, the proximity interface module 303 performs a handshake exchanging wireless packets with the source device to confirm the presence (or pairing) of the associated target device based on short range wireless signals, such as using IR, RF, ultrasound or light signals

For example, the proximity interface module 303 may include daemons running in system 300 to periodically detect if wireless packets with INIT patterns are received. Once a wireless packet with an INIT pattern is received, the proximity module 303 may send a packet including a BEGIN pattern. Subsequently, the proximity interface module 303 may sample wireless packets (e.g. IR cells) much more frequently to receive a code (e.g. via short range wireless packets). Once the code is receive, the proximity interface module 303 may keep re-emitting or broadcast wireless packets with the code until wireless packets with CONFIRM patterns are received. The device associated with the proximity interface module 303 may pair with the source device when a packet with a CONFIRM pattern is received. In one embodiment, the proximity interface module 303 establishes a short range wireless communication connection to pair with the source device. The proximity interface module 303 may authenticate the source device (e.g. based on cryptographic operations) for establishing a short range wireless communication. Strong cryptography may be employed to establish a low bandwidth yet secure short range communication. The proximity interface module 303 may forward a pairing message received via the short range wireless connection to a message formatter module 305.

In one embodiment, the message formatter module 305 parses a received pairing message to extract an application identifier and/or a secret or data embedded. For example, the message formatter module 305 may parse a pairing message based on similar formats to compose a pairing message as in the message formatter module 203 of Figure 2. The message formatter module 305 may forward an application identifier and a secret extracted from a received pairing message to a dispatcher module 307 to locate an application to pair with the nearby source device. In one embodiment, the dispatcher module 307 locates the application identified by the application identifier via a pairing configuration 309 configured with, for example, associations of application identifiers and corresponding applications (e.g. paths for application executables or commands to launch the applications).

If no application is identified by the application identifier, the dispatcher module 307 may notify the message formatter module 305 to compose a reply message for the nearby source device indicating unavailability to pair (e.g. sending a status code via the established short range wireless connection with the source device). In some embodiments, the dispatcher module 307 may reject (e.g. sending a rejection replay) a pairing message according to selection criteria (e.g. according to a device identifier included in the received pairing message) for the identified application specified inside the pairing configuration 309.

The dispatcher module 309 may launch an application, such as a social networking application 311 or a chat application 315, etc. identified in the received pairing message if the identified application is not currently running in system 301. The dispatcher module 307 may forward the secret extracted from the pairing message to the application launched (or already launched) for the application to perform pairing operations. If an identified application has already been launched, the dispatcher module 309 may locate the identified application to forward the extracted secret. In some embodiments, a physical movement measuring module 319, e.g. based on gyroscopic information from an accelerometer, generates a representation of a trace of physical movements. An application and/or a dispatcher module 307 may determine whether to pair an application (e.g. establish a regular communication session for an application) by matching the representation with a secret received from a pairing message.

The identified application may perform operations to pair with the source device according to the secret received. For example, a secret may include a password (or an authorization token) and a URL for an application to remotely login to a remote web server via the URL using the password. Once pairing operations are completed, in one embodiment, the identified application may notify the dispatcher module 307 to activate a user interface feature via a user interface module 317 to alert a user. A user interface feature may be based on mechanical (e.g. vibrating a device), visual (e.g. a pop-up window on a display, and/or activating a lighting component), multi-media (e.g. sound) or other interface mechanisms.

System 301 may be connected with a network via a network interface module 313, such as a local area network using WiFi or Bluetooth technologies, or a wide area network based on Ethernet or cellular communication technologies. Typically, local short range connections via the proximity interface module 303 has lower quality (or bandwidth) than connections established over the network interface module 313. In some embodiments, a pairing message received via the proximity interface module 303 may identify a network management application with a secret included. The identified network management application may authorize a connection with a network via the network interface module 313.

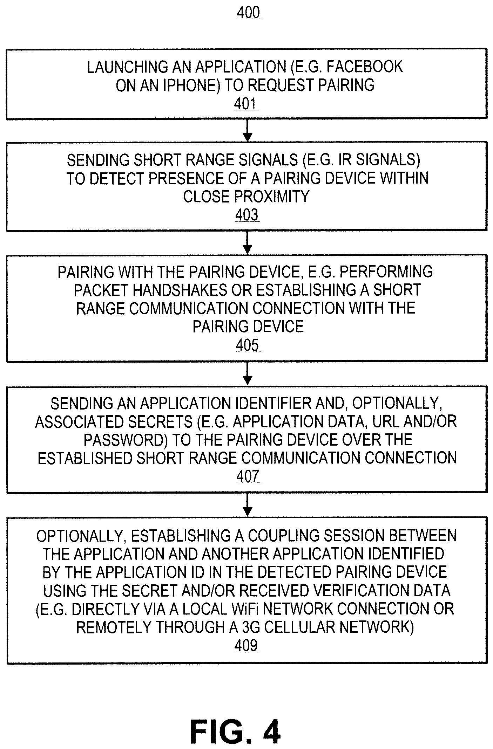

Figure 4 is a flow diagram illustrating an exemplary process to send a pairing message to a nearby device detected within close proximity. Exemplary process 400 may be performed by a processing logic that may comprise hardware (circuitry, dedicated logic, etc.), software (such as is run on a dedicated machine), or a combination of both. For example, process 400 may be performed by some components of system 200 of Figure 2. The processing logic of process 400 may launch an application which requests pairing at block 401. Pairing may include an authorization for one application running in one device (e.g. an iPhone® device) to share a portion of application data with another application running in a separate device. Examples of application data may include multi-media contents (photos, audio/video clips), contacts, playlists, passwords, or friendship lists (e.g. for Facebook application), etc. Typically, the processing logic of process 400 launches an application in response to a user request.

According to one embodiment, at block 403, the processing logic of process 400 sends short range signals wirelessly for detecting presence of a pairing device in proximity to where the short range signals originate. Short range signals may be low power wireless signals based on, for example, IR or RF technologies. Usually, short range signals may reach a few inches (e.g. one to three inches) from an originating device. In some embodiments, short range signals include flashing lights and/or ultrasound. The processing logic of process 400 may analyze data signals received in response to wireless signals broadcasted and determine if a pairing device is present nearby. For example, the processing logic of process 400 may send out wireless packets including a preconfigured pattern (e.g. INIT) for detecting a pairing device based on a particular pattern received from a response packet (e.g. with a BEGIN pattern).

If a pairing device is detected, at block 405, the processing logic of process 400 may pair with the detected device. In one embodiment, the processing logic of process 400 handshakes with the detected pairing device to exchange packet data via short range wireless signals. A handshake or other data exchanges during pairing may include sending a code and receiving response packets to verify the code has been received. In one embodiment, the processing logic of process 400 concludes a handshake with the pairing device by sending wireless packets with a preconfigured pattern such as a CONFIRM pattern. Separate devices are paired when a handshake or an exchange of data packets is successfully completed via short range wireless communication signals. In some embodiments, the processing logic of process 400 establishes short range wireless network connections to pair with a pairing device. Usually, the quality of a short range network connection may be limited to hundreds of bytes per second (BPS) and require the corresponding pairing device to stay within close proximity, such as within inches of distance. The processing logic of process 400 may perform cryptographic operations to authenticate pairing with the pairing device. In other embodiments, the processing logic of process 400 alerts a user when a pairing device is detected.

In one embodiment, the processing logic of process 400 may generate a characteristic or coded data to uniquely identify a pairing device based on a physical aspect of the occurrence of device pairing. For example, the processing logic of process 400 may generate a random challenger or a random number for device pairing. In one embodiment, the processing logic of process 400 generates a representation (e.g. a pattern, a key or a hash) from a trace of physical movements (e.g. based on gyroscopic measures by a gyroscopic measuring components included inside the device) recorded over a period of time during device pairing. The trace may indicate common accelerations or movements between devices as a characteristic to uniquely identify the paired device. In one embodiment, the processing logic of process 400 activates a user interface feature to indicate occurrence of device pairing. For example, the processing logic of process 400 starts a measure of cumulative signal strength of physical movement signals (or motions), e.g. continuously recorded, on detection of a pairing device within close proximity. The activated user interface may indicate an occurrence of device pairing event when the measured cumulative strength of physical motions reaches a threshold (e.g. a preset level).

At block 407, the processing logic of process 400 may send a pairing message to a nearby pairing device detected (e.g. subsequent to an indication of the occurrence of device pairing event). Usually, sending a pairing message requires very low quality network connection such as a short range communication connection. A pairing message may include an application identifier and a secret or data associated with the application identified. For example, a pairing message may be a URL string including a scheme name or resource type identifying an application and a path name encoded with the secret or application data. A pairing message may be composed in other formats a receiving pairing device is able to process (or parse) to extract an identifier and associated secrets embedded within.

A secret may include a specification of a resource (e.g. a file, a multi-media clip etc.) and an authorization (or a password) for accessing the resource. In some embodiments, a secret may include a network address (e.g. IP address) for a pairing device to make a regular network connection (e.g. based on Ethernet, WiFi or cellular network technologies) to perform pairing operations (e.g. to retrieve a video clip from a location located via the network address). In one embodiment, a secret may include a challenge to authenticate a device. For example, a challenge may be a random number generated on the fly or a characteristic or representation for a trace of physical movements paired devices have recorded simultaneously together during device pairing.

The processing logic of process 400 may send a pairing message for an application in response to a user request received from a user interface (e.g. associated with the application). In one embodiment, an application registers message pairing via API (Application Programming Interfaces) for activating a user interface to receive a user confirmation to send a pairing message when a pairing device is detected, such as "attemptPairing()". The processing logic of process 400 may alert a user for sending a pairing message and/or when a message pairing is completed. In one embodiment, the processing logic of process 400 waits for a message associated with the secret received from the paired device to indicate message pairing is complete.

Optionally, at block 409, the processing logic of process 400 establishes a coupling session between the application initiating the pairing message and another application in the pairing device according to the pairing message (e.g. based on an application identifier). A coupling session may be an application layer network connection. For example, separate applications may establish connections to a common remote server sharing a session identifier for a coupling session. In one embodiment, the processing logic of process 400 may establish coupling session associated with the application originating a pairing message in response to receiving a request or notification verified according to a secret of the pairing message. A coupling session may be based on an existing network connection (e.g. in a local area network using WiFi or Bluetooth technology or a wide area network using Ethernet or cellular network technologies). Two applications running in separate devices may be coupled directly via a network or indirectly via a remote server (e.g. a chat server or a web server). In one embodiment, the processing logic of process 400 matches a verification data received from the pairing device for establishing the coupling session. For example, the processing logic of process may match the verification data with a representation of a trace of physical movements (e.g. continuously recorded) for a period of time, such as the last few seconds or other preset periods. A successful match may indicate a right device is being paired.

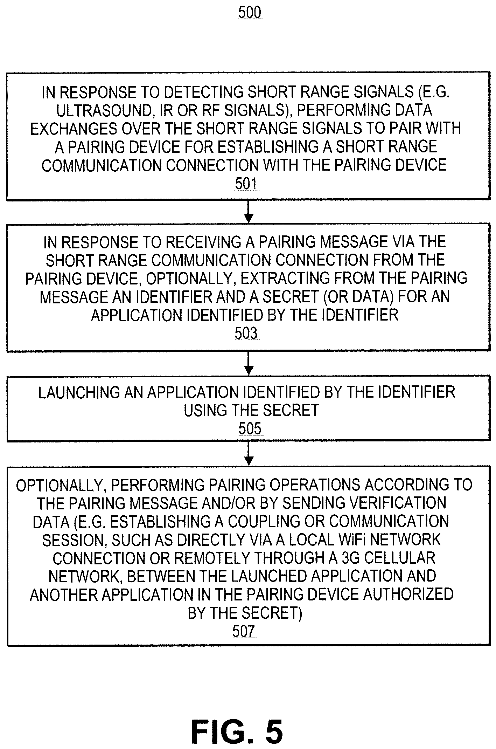

Figure 5 is a flow diagram illustrating an exemplary process to respond to pairing messages received from a nearby device located within close proximity. Exemplary process 500 may be performed by a processing logic that may comprise hardware (circuitry, dedicated logic, etc.), software (such as is run on a dedicated machine), or a combination of both. For example, process 500 may be performed by some components of system 300 of Figure 3. The processing logic of process 500 may constantly listen to short range data packets sent from within close proximity, e.g. one to three inches of separation. The short range data packets may be carried within short range wireless signals using ultrasound, light, IR or RF technologies.

In one embodiment, at block 501, the processing logic of process 500 performs data or packet exchanges or handshakes to pair with a nearby pairing device wirelessly over short range signals. For example, the processing logic of process 500 may send wireless packets including a preconfigured pattern (e.g. a BEGIN pattern) in response to a particular pattern, e.g. an INIT pattern, detected within short range signals received. The processing logic of process 500 may return a code received to confirm device pairing. In one embodiment, the processing logic of process 500 determines device pairing is completed when receiving wireless packets including a certain pattern, e.g. a CONFIRM pattern. During device pairing, the processing logic of process 500 may generate a characteristic representing a trace of physical movements, e.g. based on simultaneous gyroscopic measurements inside pairing devices. Representations of traces of physical movement can be recorded inside a device. For example, physical acceleration of a device over a threshold (e.g. 3 g-force) can trigger a recording for the physical movements of the device. A device can continuously record physical movements in a record, for example, based on motion signals or accelerometer signals. In one embodiment, the processing logic of process 500 establishes a short range communication connection with a pairing device via the short range wireless signals as a result of device pairing.

At block 503, the processing logic of process 500 may receive a pairing message in a data payload via the established short range communication session. The processing logic of process 500 may analyze a received data payload to identify a pairing message. In some embodiments, the processing logic of process 500 determines whether to accept a pairing message received based on conditions specified in a pre-configured setting. The processing logic of process 500 may send a reply indicating a rejection or a confirmation of a pairing message via the established short range communication connection. In one embodiment, the processing logic of process 500 extracts an application identifier and a secret or data from a pairing message received (e.g. using a message parser). An application identifier may identify an installed or a running application according to a configuration setting, such as a pairing configuration 309 of Figure 3. If the identified application is not yet running, in one embodiment, the processing logic of the process 500 may launch the identified application at block 505.

If a pairing message is not rejected by an application, the processing logic of process 500 may pass the extracted secret to an identified application already running. Or, if the identified application is not yet running, the processing logic of process 500 may launch the identified application with the extracted secret (e.g. as a parameter to a command preconfigured to launch the application). In some embodiments, the processing logic of process 500 calls an interface registered in a configuration setting to pass the extracted secret for an application already running. A secret may indicate pairing operations and associated parameters for an application to perform.

Optionally, at block 507, the processing logic of process 500 may perform pairing operations according to a secret extracted from a pairing message. For example, the processing logic of process 500 may execute an application identified in a pairing message to establish a coupling or communication session with a pairing device sending the pairing message. In one embodiment, the processing logic of process 500 extracts a target network address from a secret to establish a communication session. The processing logic of process 500 may present (or send out) an authorization code (e.g. password, random challenger or a characteristic generated) to obtain permission for establishing the coupling session. For example, the processing logic of process 500 may commence a chat session in a target chat room using a password included in a pairing message. A secret may include an authorization code (e.g. a random challenger or a representation for a trace of physical movements). The processing logic of process 500 can send a verification data for establishing the communication session. The verification data can include, for example, a representation of a trace of physical movements (e.g. continuously recorded) during a period of time (e.g. the last few seconds or other predetermined period).

In some embodiments, the processing logic of process 500 may authenticate a pairing message received, such as matching a representation included in the pairing message to compare traces of physical movements (e.g. based on whether the difference is within a predetermined margin of error). The processing logic of process 500 may exchanges representations of motion signals when performing pairing operations via a pairing message. In one embodiment, the processing logic of process 500 performs pairing operations when receiving a representation of motion signals from another device. The processing logic of process 500 may retrieve a locally stored representation of motion signals for the last few seconds (or other determined periods) to perform pairing operations with received representation of motions signals.

Pairing operations to match paired devices may be based on cross-correlation between representations of motion signals. Representation of motion signals may be associated with two periods of time related with a time shift or time lag. A cross-correlation may include values indicative of measures of similarity between two representations as a function of a time lag. In one embodiment, a cross-correlation can be normalized with values between 0 and 1, wherein 0 indicating no resemblance while 1 indicating complete resemblance. The cross-correlation may include one or more identifiable peaks (or local peaks). The processing logic of process 500 may determine a match between representations of motions signals if a peak of the cross-correlation satisfies a relationship with predetermined or derived reference values (e.g. greater than 0.95). In one embodiment, the representation of motion signals is based on continuously recorded physical movements in a device, for example, to decrease the latency for triggering, to better capture the time prior to deliberate shaking of the device, and/or to decrease ambiguity of multiple peaks in cross covariance. The processing logic of process 500 may ignore a pairing message received from a pairing device if an authentication fails without an attempt to establish a coupling session with the pairing device.

The processing logic of process 500 may establish a direct network connection with a pairing device based on a secret in a pairing message received. A direct network connection may be based on a local area network using technologies such as WiFi or Bluetooth. In some embodiments, the processing logic of process 500 connects to the remote web server identified in a pairing message received to establish a coupling session to pair with the pairing device indirectly (e.g. based on Ethernet connection). Once message pairing is complete, e.g. when pairing operations are successfully performed for an application according to the pairing message, the processing logic of process 500 may alert a user, e.g. via an API "justPaired()", by activating mechanical, visual and/or muti-media user interface features.

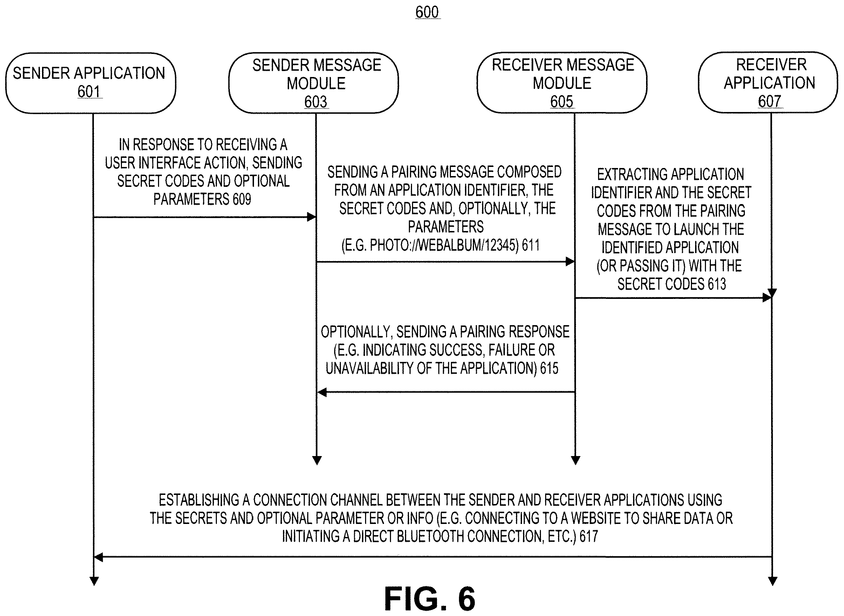

Figure 6 is a timing diagram illustrating exemplary sequences to pair a nearby devices located within close proximity. Sequences 600 may be based on mobile devices such as a source device 101 and a target device 115 of Figure 1A. A sender application 601 may be running in a source device which detects presence of a nearby target device (e.g. portable or stationed). The sender application may present a user interface for a user of the source device to confirm a pairing request with the detected target device. At sequence 609, in response to receiving a user response, the sender application 601 may send secret codes and optional parameters for pairing operations to a sender message module 603. The secret codes (e.g. a password, a random challenger etc.) and options parameters (e.g. URL, network addresses, session identifiers etc.) may be required for pairing operations to pair with the sender application 601.

In one embodiment, at sequence 611, the sender message module 603 may compose a pairing message to send to a target device hosting a receiver message module 605 and a receiver application 607. The sender message module 603 may include a message formatter, such as a message formatter module 203 of Figure 2. In one embodiment, the pairing message may include application data and an application identifier identifying an application for the application data. The sender message module 603 may send the pairing message to the receiver message module via a short range communication connection established when the target device hosting the receiver message module 605 is detected. At sequence 613, the receiver message module 605 may extract or decrypt an application identifier and a secret (e.g. including the secret codes) from a received pairing message to launch a receiver application 607 identified by the application identifier using the secret. The receiver message module 605 may include a message formatter, such as a message formatter module 305 of Figure 3. In one embodiment, the receiver message module 605 forwards the secret to the receiver application 607 already running without launching it again. The receiver application 607 may perform pairing operations according to the secret received from the receiver message module 605.

Optionally, at sequence 617, the receiver application 607 may establish a connection channel (or communication channel) with the sender application 601 using the secret (e.g. secret codes, optional parameters and/or other information) received from the sender application 601 via the pairing message. The connection channel for pairing between the receiver application 607 and the sender application 601 may be based on a direct network connection (e.g. via a Bluetooth or WiFi network) or an indirect network connection (e.g. via a remote web server through Ethernet network). Typically, a connection channel for pairing established between two applications based on a pairing message is separate from a short range communication channel established for passing the pairing message between two devices hosting the two applications. Thus, even when the source device hosting the sender application 601 is relocated out from close proximity around the receiver device hosting the receiver application 607, the established connection channel for pairing may still be maintained between the sender application 601 and the receiver application 607.

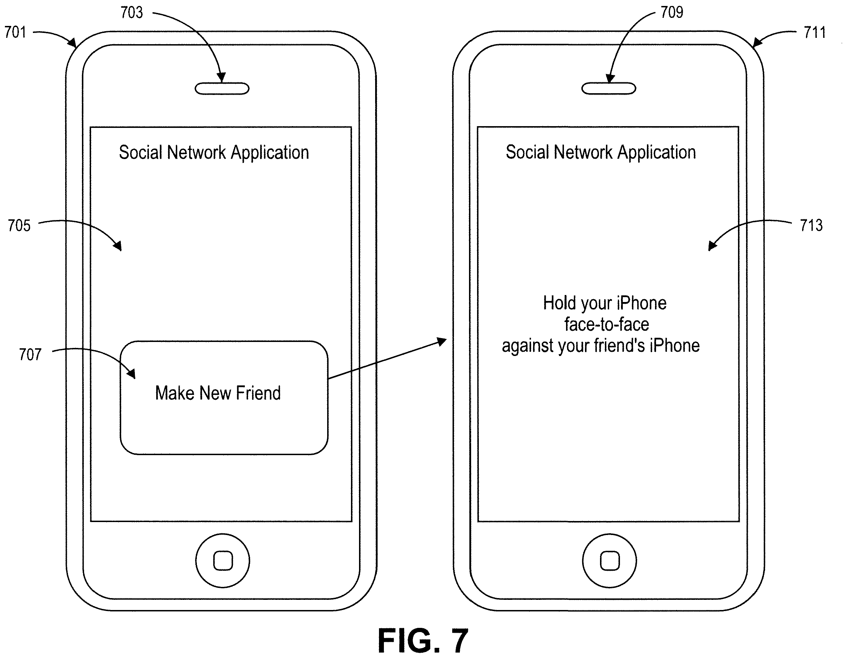

Figure 7 is a block diagram illustrating one example of user interfaces presented for pairing nearby devices located within close proximity. Devices 701 711 may be mobile or portable devices, such as source device 101 and target device 115 of Figure 1A. Both devices may include proximity sensors 703 709 to enable presence detection when placed in proximity to each other. In one embodiment, both devices are running social network applications as indicated on displays 705 713. The sender device 701 may detect the presence of device 711 and present a pop-up box 707 for a user to confirm whether to send a pairing message to pair with the detected device 711. The source device 711 may be running a social network application displaying a message to remind a user to hold a face-to-face position with another device for pairing. Typically, holding two devices face-to-face ensures physically in proximity to each other for sending a pairing message to complete pairing operations securely. In one embodiment, once pairing operations are completed, devices 701 and 711 alert users by vibrating the devices and/or giving out special audio tones.

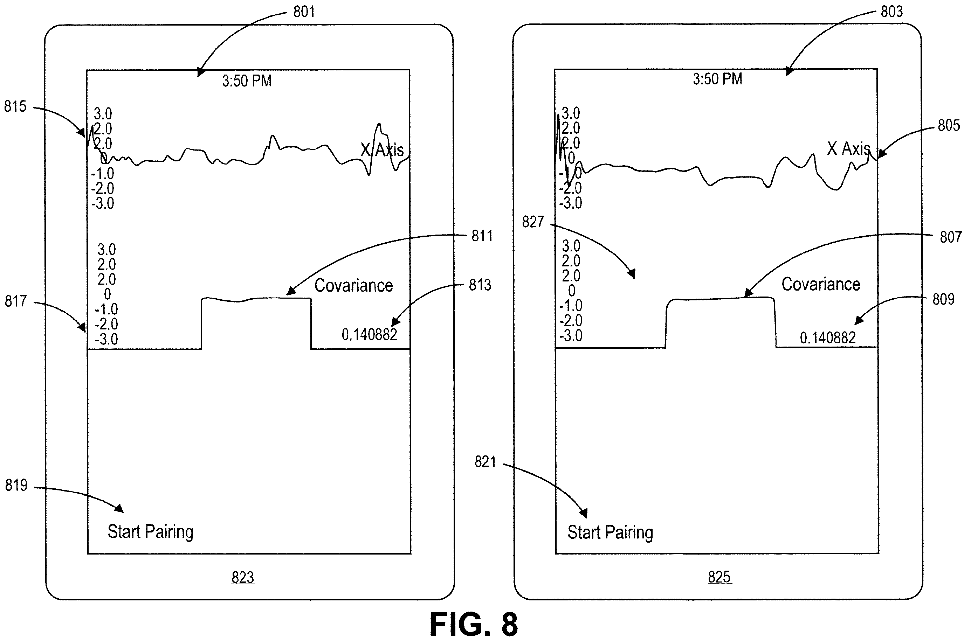

Figure 8 is an illustration diagram for one example of two devices performing match verifications based on representations of motion signals. Devices 823 825 may be mobile or portable devices, such as source device 101 and target device 115 of Figure 1A. User interface 810 may include a chart 815 indicating a first representation of motion signals detected during a period of time in device 823. Similarly, user interface 803 may include a chart 805 indicating a second representation of motion signals detected during another period of time in device 825. Devices 823, 825 may exchange representations of motion signals to verify if they are paired devices.

Covariance chart 817 may indicate cross-correlation between the first representation of motion signals stored inside device 823 and the second representation of motion signals received from device 825. A peak covariance 811 is identified to be 0.140882 813. Correspondingly, user interface 803 includes covariance chart 807 of cross-correlation determined in device 825 between the first and second representations of signals. Chart 827 has a peak 807 of value 0.140882 809. Pairing between devices 823 and 825 may not be successful as 0.140882 is smaller than a predetermined value (e.g. 0.95).

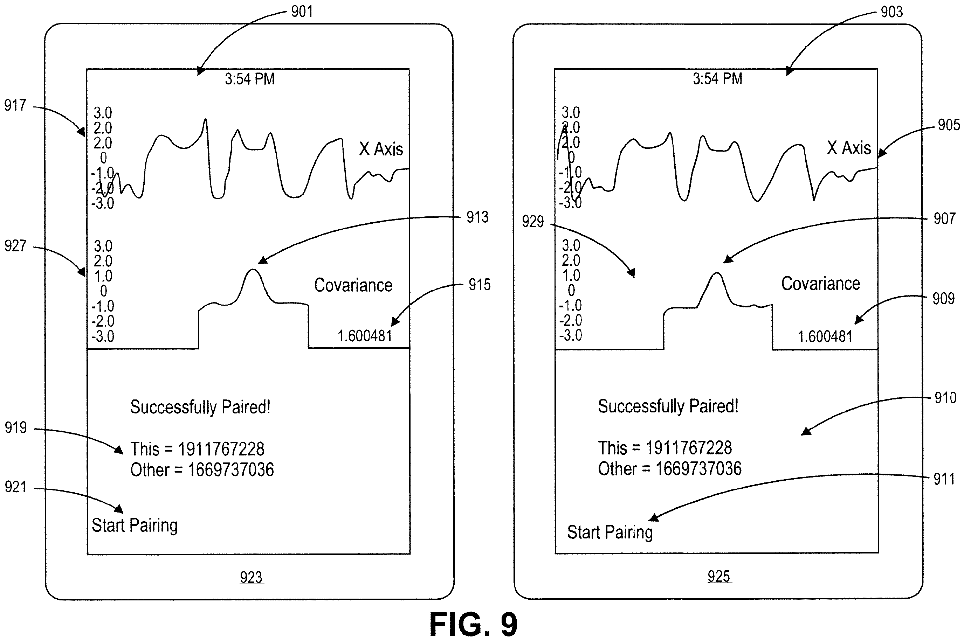

Figure 9 is an illustration diagram for one example of matching two paired devices based on representations of motion signals. Devices 923 925 may be mobile or portable devices, such as source device 101 and target device 115 of Figure 1A. When performing operations to verify whether devices 923 925 should be paired, these two devices can be coupled via a network connection (wired or wireless) independent of physical locations relative to each other. User interface 901 may include a chart 917 indicating a first representation of motion signals detected during a period of time in device 923. Similarly, user interface 903 may include a chart 905 indicating a second representation of motion signals detected during another period of time in device 925. Devices 923,925 may exchange representations of motion signals to verify if they are paired devices.

Covariance chart 927 may indicate cross-correlation between the first representation of motion signals stored inside device 923 and the second representation of motion signals received from device 925. A peak covariance 913 is identified to be 1.600481 915. Correspondingly, user interface 903 includes covariance chart 929 of cross-correlation between the first and second representations of signals. Chart 929 has a peak 907 of value 1.600481 909. Pairing between devices 923, 925 may be successful as 1.600481 is greater than a preset peak threshold (e.g. 0.95). In some embodiments, signals can be normalized. A peak threshold value may be configured depending on whether signals are normalized. Devices 923and 925 may separately verify pairing of both devices at different times. In one embodiment, a device presents visual notification via a user interface to indicate status of pairing operations 912 911 and results of pairing operations 919 910.

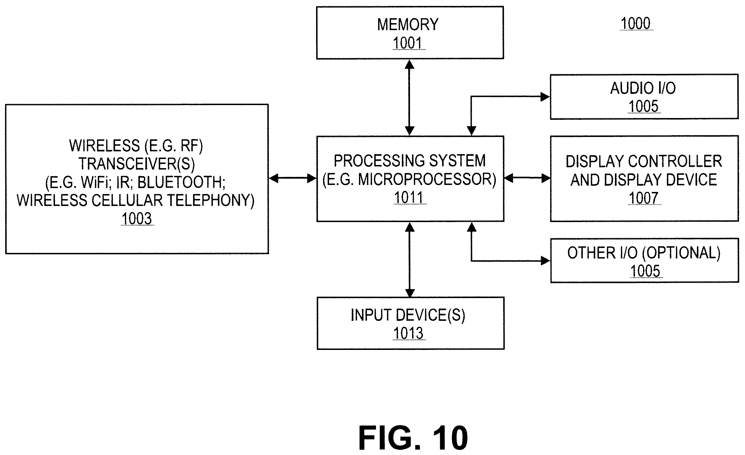

Figure 10 shows an example of a data processing system which may be used with one embodiment of the present invention. For example, system 1000 may be implemented as part of systems as shown in Figures 2 and 3. The data processing system 1000 shown in Figure 10 includes a processing system 1011, which may be one or more microprocessors, or which may be a system on a chip integrated circuit, and the system also includes memory 1001 for storing data and programs for execution by the processing system. The system 1000 also includes an audio input/output subsystem 1005 which may include a microphone and a speaker for, for example, playing back music or providing telephone functionality through the speaker and microphone.

A display controller and display device 1007 provide a visual user interface for the user; this digital interface may include a graphical user interface which is similar to that shown on an iPhone® phone device or on a Macintosh computer when running OS X operating system software. The system 1000 also includes one or more wireless transceivers 1003 to communicate with another data processing system. A wireless transceiver may be a WiFi transceiver, an infrared transceiver, a Bluetooth transceiver, and/or a wireless cellular telephony transceiver. It will be appreciated that additional components, not shown, may also be part of the system 1000 in certain embodiments, and in certain embodiments fewer components than shown in Figure 10 may also be used in a data processing system.

The data processing system 1000 also includes one or more input devices 1013 which are provided to allow a user to provide input to the system. These input devices may be a keypad or a keyboard or a touch panel or a multi touch panel. The data processing system 1000 also includes an optional input/output device 1015 which may be a connector for a dock. It will be appreciated that one or more buses, not shown, may be used to interconnect the various components as is well known in the art. The data processing system shown in Figure 10 may be a handheld computer or a personal digital assistant (PDA), or a cellular telephone with PDA like functionality, or a handheld computer which includes a cellular telephone, or a media player, such as an iPod, or devices which combine aspects or functions of these devices, such as a media player combined with a PDA and a cellular telephone in one device. In other embodiments, the data processing system 1000 may be a network computer or an embedded processing device within another device, or other types of data processing systems which have fewer components or perhaps more components than that shown in Figure 10.

At least certain embodiments of the inventions may be part of a digital media player, such as a portable music and/or video media player, which may include a media processing system to present the media, a storage device to store the media and may further include a radio frequency (RF) transceiver (e.g., an RF transceiver for a cellular telephone) coupled with an antenna system and the media processing system. In certain embodiments, media stored on a remote storage device may be transmitted to the media player through the RF transceiver. The media may be, for example, one or more of music or other audio, still pictures, or motion pictures.

The portable media player may include a media selection device, such as a click wheel input device on an iPhone®, an iPod®, iPod Shuffle® or iPod Nano® media player from Apple Computer, Inc. of Cupertino, CA, a touch screen input device, pushbutton device, movable pointing input device or other input device. The media selection device may be used to select the media stored on the storage device and/or the remote storage device. The portable media player may, in at least certain embodiments, include a display device which is coupled to the media processing system to display titles or other indicators of media being selected through the input device and being presented, either through a speaker or earphone(s), or on the display device, or on both display device and a speaker or earphone(s).

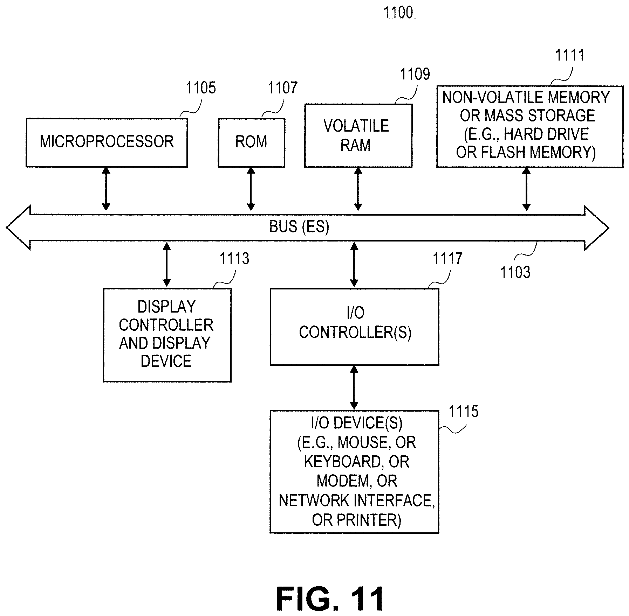

Figure 11 shows one example of a data processing system such as a computer system, which may be used with one embodiment the present invention. For example, the system 1100 may be implemented as a part of the systems shown in Figures 2 and 3. Note that while Figure 11 illustrates various components of a computer system, it is not intended to represent any particular architecture or manner of interconnecting the components as such details are not germane to the present invention. It will also be appreciated that network computers and other data processing systems which have fewer components or perhaps more components may also be used with the present invention.

As shown in Figure 11, the computer system 1101, which is a form of a data processing system, includes a bus 1103 which is coupled to a microprocessor(s) 1105 and a ROM (Read Only Memory) 1107 and volatile RAM 1109 and a non-volatile memory 1111. The microprocessor 1105 may retrieve the instructions from the memories 1107, 1109, 1111 and execute the instructions to perform operations described above. The bus 1103 interconnects these various components together and also interconnects these components 1105, 1107, 1109, and 1111 to a display controller and display device 1113 and to peripheral devices such as input/output (I/O) devices which may be mice, keyboards, modems, network interfaces, printers and other devices which are well known in the art. Typically, the input/output devices 1115 are coupled to the system through input/output controllers 1117. The volatile RAM (Random Access Memory) 1109 is typically implemented as dynamic RAM (DRAM) which requires power continually in order to refresh or maintain the data in the memory.

The mass storage 1111 is typically a magnetic hard drive or a magnetic optical drive or an optical drive or a DVD RAM or a flash memory or other types of memory systems which maintain data (e.g. large amounts of data) even after power is removed from the system. Typically, the mass storage 1111 will also be a random access memory although this is not required. While Figure 11 shows that the mass storage 1111 is a local device coupled directly to the rest of the components in the data processing system, it will be appreciated that the present invention may utilize a non-volatile memory which is remote from the system, such as a network storage device which is coupled to the data processing system through a network interface such as a modem or Ethernet interface or wireless networking interface. The bus 1103 may include one or more buses connected to each other through various bridges, controllers and/or adapters as is well known in the art.

Portions of what was described above may be implemented with logic circuitry such as a dedicated logic circuit or with a microcontroller or other form of processing core that executes program code instructions. Thus processes taught by the discussion above may be performed with program code such as machine-executable instructions that cause a machine that executes these instructions to perform certain functions. In this context, a "machine" may be a machine that converts intermediate form (or "abstract") instructions into processor specific instructions (e.g., an abstract execution environment such as a "virtual machine" (e.g., a Java Virtual Machine), an interpreter, a Common Language Runtime, a high-level language virtual machine, etc.), and/or, electronic circuitry disposed on a semiconductor chip (e.g., "logic circuitry" implemented with transistors) designed to execute instructions such as a general-purpose processor and/or a special-purpose processor. Processes taught by the discussion above may also be performed by (in the alternative to a machine or in combination with a machine) electronic circuitry designed to perform the processes (or a portion thereof) without the execution of program code.

An article of manufacture may be used to store program code. An article of manufacture that stores program code may be embodied as, but is not limited to, one or more memories (e.g., one or more flash memories, random access memories (static, dynamic or other)), optical disks, CD-ROMs, DVD ROMs, EPROMs, EEPROMs, magnetic or optical cards or other type of machine-readable media suitable for storing electronic instructions. Program code may also be downloaded from a remote computer (e.g., a server) to a requesting computer (e.g., a client) by way of data signals embodied in a propagation medium (e.g., via a communication link (e.g., a network connection)).

The preceding detailed descriptions are presented in terms of algorithms and symbolic representations of operations on data bits within a computer memory. These algorithmic descriptions and representations are the tools used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be kept in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to an apparatus for performing the operations described herein. This apparatus may be specially constructed for the required purpose, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), RAMs, EPROMs, EEPROMs, magnetic or optical cards, or any type of media suitable for storing electronic instructions, and each coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the operations described. The required structure for a variety of these systems will be evident from the description below. In addition, the present invention is not described with reference to any particular programming language. It will be appreciated that a variety of programming languages may be used to implement the teachings of the invention as described herein.

The foregoing discussion merely describes some exemplary embodiments of the present invention. One skilled in the art will readily recognize from such discussion, the accompanying drawings and the claims that various modifications can be made without departing from the scope of the invention.

## Claims

1. A computer implemented method applicable for pairing mobile devices, comprising:
in response to a pairing request (401) from an application in a source device (101), establishing (405), at the source device (101), a first communication channel with a target device (115) in proximity to the source device (101);
detecting (403) that the source device (101) is in physical proximity to the target device (115);
recording, at the source device (101), a trace of physical movements of the source device (101) while the target device (115) is located in the proximity to the source device (101)
sending (407) a pairing message from the source device (101) to the target device (115) in proximity to the source device (101) over the first communication channel, the pairing message including a secret and an identifier, the secret including a representation of the trace of physical movements of the source device (101), the identifier identifying the application ;
in response to receiving, at the source device (101), verification data back from the target device (115) for a second communication channel separate from the first communication channel, verifying, by the source device (101), whether the source device (101) and the target device (115) are paired devices, wherein the source (101) and target devices (115) are paired if the verification data matches the trace of physical movements recorded; and
if the source device (101) and the target devices (115) are verified as paired devices, establishing (409), by the source device (101), a coupling session for the application over the second communication channel between the source (101) and target devices (115).

2. The method of claim 1, wherein the establishment of the first communication channel occurs when the target device is in proximity to the source device.

3. The method of claim 1, wherein the first communication channel is based on an Infrared connection.

4. The method of claim 1, wherein sending the pairing message comprises:
detecting presence of the target device (101) in proximity to the source device (101); and
in response to detection of the target device, displaying a user interface indicating whether to send the pairing message.

5. The method of claim 4, further comprising:
formatting the pairing message according to a setting, the setting being configured with the identifier associated with the application.

6. The method of claim 5, wherein the setting is configured with the secret.

7. The method of claim 5, wherein the secret includes a token, further comprising:
generating the token via a random number generator.

8. The method of claim 5, wherein the secret includes a key representing the trace of physical movements, further comprising:
generating the key from the recorded trace.

9. The method of claim 8, wherein the recording step stores physical movements continuously recorded for the source device (101).

10. The method of claim 1, wherein the verification comprises:
matching the secret with the
verification data received.

11. The method of claim 10, wherein the secret includes an URL (Universal Resource Locator) indicating a location of resource associated with the application.

12. The method of claim 11, wherein the application is a social networking application and wherein the resource includes a user profile.

13. The method of claim 10, wherein the second communication channel is based on a Wi-Fi (wireless Ethernet network) network connection and wherein the secret includes an IP (Internet Protocol) address.

14. A machine-readable non-transitory storage medium having instructions, when executed by a machine, cause the machine to perform the method of claim 1.

15. An apparatus capable of pairing mobile devices, comprising:
a sensor (103) logic to detect a target device in proximity to the apparatus;
a memory (1001) storing executable instructions including an application;
a processor (1011) coupled to the sensor (103) logic and the memory (1001), the processor (1011) executing the executable instructions from the memory (1001) to perform the method of claim 1.

## Patentansprüche

1. Computerimplementiertes Verfahren, das zum Koppeln von mobilen Vorrichtungen geeignet ist, umfassend:
- als Reaktion auf eine Kopplungsanforderung (401) von einer Anwendung in einer Quellvorrichtung (101), Herstellen (405), an der Quellvorrichtung (101), eines ersten Kommunikationskanals mit einer Zielvorrichtung (115) in der Nähe der Quellvorrichtung (101);
- Erfassen (403), dass sich die Quellvorrichtung (101) in physischer Nähe zur Zielvorrichtung (115) befindet;
- Aufzeichnen einer Spur von physikalischen Bewegungen der Quellvorrichtung (101) an der Quellvorrichtung (101), während sich die Zielvorrichtung (115) in der Nähe der Quellvorrichtung (101) befindet.
- Senden (407) einer Paarungsnachricht von der Quellvorrichtung (101) zu der Zielvorrichtung (115) in der Nähe der Quellvorrichtung (101) über den ersten Kommunikationskanal, wobei die Paarungsnachricht ein Geheimnis und einen Identifikator enthält, wobei das Geheimnis eine Darstellung der Spur von physikalischen Bewegungen der Quellvorrichtung (101) enthält, wobei der Identifikator die Anwendung identifiziert;
- in Reaktion auf den Empfang von Verifizierungsdaten von der Zielvorrichtung (115) für einen zweiten Kommunikationskanal, der von dem ersten Kommunikationskanal getrennt ist, an der Quellvorrichtung (101), Überprüfen, durch die Quellvorrichtung (101), ob die Quellvorrichtung (101) und die Zielvorrichtung (115) gepaarte Vorrichtungen sind, wobei die Quellvorrichtung (101) und die Zielvorrichtung (115) gepaart sind, wenn die Verifizierungsdaten mit der Spur der aufgezeichneten physikalischen Bewegungen übereinstimmen; und
- wenn die Quellvorrichtung (101) und die Zielvorrichtungen (115) als gekoppelte Vorrichtungen verifiziert werden, Herstellen (409) einer Koppelsitzung für die Anwendung über den zweiten Kommunikationskanal zwischen der Quellvorrichtung (101) und den Zielvorrichtungen (115) durch die Quellvorrichtung (101).

2. Verfahren nach Anspruch 1, wobei das Herstellen des ersten Kommunikationskanals erfolgt, wenn sich die Zielvorrichtung in der Nähe der Quellvorrichtung befindet.

3. Verfahren nach Anspruch 1, wobei der erste Kommunikationskanal auf einer Infrarotverbindung basiert.

4. Verfahren nach Anspruch 1, wobei das Senden der Paarungsnachricht umfasst:
- Erfassen des Vorhandenseins der Zielvorrichtung (101) in der Nähe der Quellvorrichtung (101); und
- als Reaktion auf das Erkennen der Zielvorrichtung, Anzeigen einer Benutzeroberfläche, die anzeigt, ob die Paarungsnachricht gesendet werden soll.

5. Verfahren nach Anspruch 4, ferner umfassend:
- Formatieren der Paarungsnachricht gemäß einer Einstellung, wobei die Einstellung mit dem der Anwendung zugeordneten Identifikator konfiguriert ist.

6. Verfahren nach Anspruch 5, wobei die Einstellung mit dem Geheimnis konfiguriert ist.

7. Verfahren nach Anspruch 5, wobei das Geheimnis ein Token beinhaltet, ferner umfassend:
- Erzeugen des Tokens über einen Zufallszahlengenerator.

8. Verfahren nach Anspruch 5, wobei das Geheimnis einen Schlüssel beinhaltet, der die Spur von physikalischen Bewegungen darstellt, ferner umfassend:
- Erzeugen des Schlüssels aus der aufgezeichneten Spur.

9. Verfahren nach Anspruch 8, wobei der Aufzeichnungsschritt physikalische Bewegungen speichert, die kontinuierlich für die Quellvorrichtung (101) aufgezeichnet werden.

10. Verfahren nach Anspruch 1, wobei die Überprüfung umfasst:
- Abgleich des Geheimnisses mit den empfangenen Verifikationsdaten.

11. Verfahren nach Anspruch 10, wobei das Geheimnis eine URL (Universal Resource Locator) beinhaltet, die eine Position der mit der Anwendung verbundenen Ressource angibt.

12. Verfahren nach Anspruch 11, wobei die Anwendung eine Anwendung für soziale Netzwerke ist und worin die Ressource ein Benutzerprofil beinhaltet.

13. Verfahren nach Anspruch 10, wobei der zweite Kommunikationskanal auf einer Wi-Fi (Wireless Ethernet Network)-Netzwerkverbindung basiert und wobei das Geheimnis eine IP (Internet Protocol)-Adresse beinhaltet.

14. Maschinenlesbares, nichtflüchtiges Speichermedium mit Anweisungen, die, wenn sie von einer Maschine ausgeführt werden, bewirken, dass die Maschine das Verfahren nach Anspruch 1 durchführt.

15. Vorrichtung, die in der Lage ist, mobile Vorrichtungen zu koppeln, umfassend:
- eine Sensorlogik (103) zum Erfassen einer Zielvorrichtung in der Nähe der Vorrichtung;
- einen Speicher (1001), der ausführbare Anweisungen speichert, die eine Anwendung beinhalten;
- einen Prozessor (1011), der mit der Sensorlogik (103) und dem Speicher (1001) gekoppelt ist, wobei der Prozessor (1011) die ausführbaren Anweisungen aus dem Speicher (1001) ausführt, um das Verfahren nach Anspruch 1 durchzuführen.

## Revendications

1. Un procédé mis en oeuvre par informatique applicable à l'appariement de dispositifs mobiles, comprenant :
en réponse à une requête d'appariement (401) provenant d'une application dans un dispositif source (101), l'établissement (405), au niveau du dispositif source (101), d'un premier canal de communication avec un dispositif cible (115) à proximité du dispositif source (101) ;
la détection (403) que le dispositif source (101) est à proximité physique du dispositif cible (115) ;
l'enregistrement, au niveau du dispositif source (101), d'une trace des déplacements physiques du dispositif source (101) tandis que le dispositif cible (115) est situé à la proximité du dispositif source ;
l'envoi (407) d'un message d'appariement du dispositif source (101) au dispositif cible (115) à proximité du dispositif source (101) via le premier canal de communication, le message d'appariement comprenant un secret et un identifiant, le secret comprenant une représentation de la trace des déplacements physiques du dispositif source (101), l'identifiant identifiant l'application ;
en réponse à la réception, au niveau du dispositif source (101), de données de vérification retournées du dispositif cible (115) pour un second canal de communication distinct du premier canal de communication, la vérification, par le dispositif source (101), si le dispositif source (101) et le dispositif cible (115) sont ou non des dispositifs appariés, les dispositifs source (101) et cible (115) étant appariés si les données de vérification concordent avec la trace des mouvements physiques enregistrés ; et
si le dispositif source (101) et le dispositif cible (115) sont vérifiés comme étant des dispositifs appariés, l'établissement (409), par le dispositif source (101), d'une session de couplage pour l'application via le second canal de communication entre les dispositifs source (101) et cible (115).

2. Le procédé de la revendication 1, dans lequel l'établissement du premier canal de communication a lieu lorsque le dispositif cible est à proximité du dispositif source.

3. Le procédé de la revendication 1, dans lequel le premier canal de communication est basé sur une connexion par infrarouge.

4. Le procédé de la revendication 1, dans lequel l'envoi du message d'appariement comprend :
la détection de la présence du dispositif cible (115) à proximité du dispositif source (101) ; et
en réponse à la détection du dispositif cible, l'affichage d'une interface utilisateur indiquant s'il y a ou non lieu d'envoyer le message d'appariement.

5. Le procédé de la revendication 4, comprenant en outre :
le formatage du message d'appariement selon un paramétrage, le paramétrage étant configuré avec l'identifiant associé à l'application.

6. Le procédé de la revendication 5, dans lequel le paramétrage est configuré avec le secret.

7. Le procédé de la revendication 5, dans lequel le secret comprend un jeton, comprenant en outre :
la génération du jeton via un générateur de nombres aléatoires.

8. Le procédé de la revendication 5, dans lequel le secret comprend une clé représentant la trace des mouvements physiques, comprenant en outre :
la génération de la clé à partir de la trace enregistrée.

9. Le procédé de la revendication 8, dans lequel l'étape d'enregistrement stocke les déplacements physiques enregistrés en continu pour le dispositif source (101).

10. Le procédé de la revendication 1, dans lequel la vérification comprend :
la mise en concordance du secret avec les données de vérification reçues.

11. Le procédé de la revendication 10, dans lequel le secret comprend un URL (Localisateur Universel de Ressource) indiquant un emplacement d'une ressource associée à l'application.

12. Le procédé de la revendication 11, dans lequel l'application est une application de réseau social et dans lequel la ressource comprend un profil utilisateur.

13. Le procédé de la revendication 10, dans lequel le second canal de communication est basé sur une connexion réseau WiFi (réseau Ethernet sans fil) et dans lequel le secret comprend une adresse IP (Protocole Internet).

14. Un support de stockage non transitoire lisible par machine avec des instructions qui, lorsqu'elles sont exécutées par une machine, font en sorte que la machine met en oeuvre le procédé de la revendication 1.

15. Un appareil capable d'apparier des dispositifs mobiles, comprenant :
une logique à capteur (103) pour la détection d'un dispositif cible à proximité de l'appareil ;
une mémoire (1001) stockant des instructions exécutables incluant une application ;
un processeur (1011) couplé à la logique à capteur (103) et à la mémoire (1001), le processeur (1011) exécutant les instructions exécutables à partir de la mémoire (1001) pour mettre en oeuvre le procédé de la revendication 1.
